# EUROPÄISCHE PATENTSCHRIFT

(11) **EP 3 647 615 B1**
(45) Veröffentlichungstag und Bekanntmachung des Hinweises auf die Patenterteilung: **19.06.2024**
(21) Anmeldenummer: 19202393.5
(22) Anmeldetag: 10.10.2019
(51) Int. Cl.: F16C 33/12, F16C 33/14, F16C 33/30, F16C 33/44, F16C 33/56, F16C 33/64, F16C 33/78, F16C 33/58, C23C 4/01, C23C 4/12, C23C 24/04, B33Y 10/00, B33Y 80/00

(54) **METALLISCHES WÄLZLAGERBAUTEIL**
METALLIC ROLLING BEARING COMPONENT
COMPOSANT DE PALIER À ROULEAUX MÉTALLIQUE

(30) Priorität: 29.10.2018 DE 102018218507
(43) Veröffentlichungstag der Anmeldung: 06.05.2020
(73) Patentinhaber: Aktiebolaget SKF, 415 50 Göteborg (SE)
(72) Erfinder: von Schleinitz, Thilo, 97422 Schweinfurt (DE)
(74) Vertreter: Kuhstrebe, Jochen

(56) Entgegenhaltungen:
- EP-A1- 2 778 256
- CN-A- 108 247 043
- DE-A1-102007 056 451
- DE-A1-102009 019 593
- DE-A1-102011 083 054
- DE-A1-102015 206 892
- DE-C1- 10 058 748
- JP-B2- 5 072 510
- US-A1- 2005 221 110
- US-A1- 2018 141 127
- US-A1- 2018 223 902

## Beschreibung

Vorliegende Erfindung betrifft ein metallisches Wälzlagerbauteil mit zumindest einer partiellen Metallbeschichtung gemäß dem Oberbegriff von Patentanspruch 1, sowie ein Verfahren zum Herstellen eines metallischen Wälzlagerbauteils mit zumindest einer partiellen Metallbeschichtung gemäß dem Oberbegriff von Patentanspruch 7.

Wälzlagerbauteile, insbesondere Lagerbauteile von Großlagern, erhalten an ihren Außenflächen häufig eine Verzinkung als Metallbeschichtung, beispielsweise Korrosionsschutz. Bislang wird hier neben einer Lackierung mit einem zinkhaltigen Lack öfters eine Flammspritzverzinkung als Verzinkungsart verwendet. Eine solche Verzinkung bietet darüber hinaus den Vorteil, dass Zink hohe Reibwerte bereitstellt, welche für die Flächen, welche zum Anschrauben bzw. Anflanschen des Lagers verwendet werden, günstig sind.

Um eine Metallbeschichtung auf einer Oberfläche aufzubringen, wird diese Oberfläche aufgeraut, um eine Haftung der Metallbeschichtung, die durch eine Flammspritzverzinkung oder ein Cold-Spray-Verfahren aufgebracht werden kann, zu ermöglichen. Um die zu beschichtende Oberfläche aufzurauen, kann diese beispielsweise durch Sandstrahlen vorbereitet werden. Hierzu müssen sämtliche anderen Flächen, die nicht beschichtet werden sollen, zunächst abgedeckt werden. Die Flammspritzschicht haftet im Wesentlichen durch eine mechanische Verklammerung und benötigt daher einen rauen Untergrund, der durch Sandstrahlen erreicht wird. Ähnliches gilt für viele Lacke oder durch Cold-Spray-Verfahren aufgetragene Beschichtungen.

Nachteilig ist dabei jedoch, dass die sehr harten Partikel des Sandstrahls die Oberflächen des Wälzlagerbauteils zusätzlich zu dem gewünschten Aufrauen auch darüber hinaus beschädigen können und beispielsweise fein gearbeitete Konturen, oder beispielsweise die Ebenheit oder auch andere Form- und Lagetoleranzen, verändern können. Des Weiteren ist es möglich, dass die Sandstrahlpartikel trotz Abreinigen an der Oberfläche verbleiben und in das fertige Lager gelangen, wo sie die Laufbahnen schädigen und zu erheblichen Schäden bis hin zu einem verfrühten Lagerausfall führen können.

Wurden die zu beschichtenden Oberflächen vor der Verzinkung fein bearbeitet, kann das für die Verzinkung erforderliche Sandstrahlen die Güte dieser fein bearbeiteten Oberflächen, insbesondere die Form- und Lagetoleranzen, zu sehr beeinträchtigen. Diese sind jedoch gerade an äußeren Montageflächen des Lagers weiterhin erwünscht. Daher kann nach der Beschichtung eine Nachbearbeitung der Oberflächen erforderlich sein, um Form- und Lagetoleranzen wiederherzustellen. Andernfalls kann es zu einer undefinierten Anlagegeometrie kommen.

Darüber hinaus ist, auch wenn die Oberflächen durch Sandstrahlen vorbereitet wurden, die Haftung einer Flammspritzverzinkung ein kritischer Punkt. Um die Haftung der Flammspritzverzinkung sicherzustellen, wird daher üblicherweise ein Umgriff der Schicht vorgenommen, d. h. die Schicht umschließt das Werkstück vollständig. Sollen jedoch nur plane Flächen ohne Umgriff beschichtet werden, besteht die Gefahr von Abplatzungen, da die Flammspritzverzinkung keine geschlossene Schicht darstellt und an ihren Rändern angreifbar ist.

Zudem wird bei der Flammspritzverzinkung das Zink- oder Zinklegierungspulver aufgeschmolzen und in Tropfenform auf die Oberfläche geblasen. Insbesondere sogenanntes Overspray, also seitlich an dem Ziel vorbeifliegende Tropfen, kann zu einer Schichtbildung an unerwünschten Bereichen führen. Es ergibt sich also eine stark poröse, schwammähnliche Schicht mit schwer zu kontrollierender Dicke und unebener Oberfläche. Die entstehende poröse Zinkschicht hat einen schlechten Korrosionswiderstand sowie eine schlechte chemische Beständigkeit. Daher werden üblicherweise flammgespritzte Zinkschichten zusätzlich mit Lacken versiegelt.

Auch bei anderen Metallbeschichtungen werden üblicherweise die oben beschriebenen Verfahren verwendet. Die hierdurch aufgebrachten Beschichtungen erfordern jedoch, wie oben beschrieben, eine aufgeraute Oberfläche, um auf der zu beschichtenden Oberfläche zu haften, und zeigen die gleichen Nachteile.

EP 2 778 256 zeigt ein metallisches Wälzlagerbauteil nach dem Oberbegriff des Anspruchs 1 und ein Verfahren zur Herstellung eines metallischen Wälzlagerbauteils nach dem Oberbegriff des Anspruchs 7.

Es ist daher eine Aufgabe vorliegender Erfindung, ein metallisches Wälzlagerbauteil mit einer verbesserten Metallbeschichtung bereitzustellen, die direkt auf einer nicht-sandgestrahlten Oberfläche aufgebracht werden kann.

Diese Aufgabe wird durch das metallische Wälzlagerbauteil gemäß Patentanspruch 1 sowie das Verfahren zum Herstellen eines metallischen Wälzlagerbauteils gemäß Patentanspruch 7 gelöst.

Es wird ein metallisches Wälzlagerbauteil mit zumindest einer nicht-sandgestrahlten Oberfläche und mit zumindest einer partiellen Metallbeschichtung vorgeschlagen. Im Gegensatz zu bekannten metallischen Wälzlagerbauteilen, bei denen eine Metallbeschichtung durch Flammspritzverzinkung aufgetragen wird, wozu eine sandgestrahlte Oberfläche erforderlich ist, wird die Metallbeschichtung des hier vorgeschlagenen metallischen Wälzlagerbauteils mittels eines Hochdruck-Cold-Spray-Verfahrens direkt auf die nicht-sandgestrahlte Oberfläche aufgebracht. Dabei liegt der Druck des Gasstrahls in dem Bereich von 50 bis 100 bar, und die Metallbeschichtung weist einen Haftabzugswert von 50 MPa auf.

Wie oben erläutert, wurde bislang angenommen, dass für alle metallischen Beschichtungen eine aufgeraute Oberfläche erforderlich ist, um eine gute Haftung der Beschichtung zu ermöglichen. Die Erfinder haben nun überraschend erkannt, dass bei Verwendung eines Hochdruck-Cold-Spray-Verfahrens, bei ausreichend hoher kinetischer Energie und weiteren Randbedingungen eine gute Haftung der Beschichtung auch ohne ein vorheriges Aufrauen der Oberfläche vorliegt.

Bei dem Cold-Spray-Verfahren, auch Kaltgasbeschichten oder Kaltgasspritzen genannt, wird ein vorerhitzter Gasstrahl erzeugt, in den ein überwiegend metallisches Pulver eingespeist wird, welches jedoch nicht aufgeschmolzen wird. Das Pulver kann beispielsweise Eisen, Zink, Kupfer, Zinn, Aluminium, Stahl oder eine Kombination davon aufweisen. Trifft das Pulver auf die nicht-aufgeraute, insbesondere nicht-sandgestrahlte, Oberfläche auf, verbindet sich das Pulver bei geeigneter Parametrisierung verschweißend mit der Oberfläche und bildet eine Beschichtung.

Da kein Aufrauen der Oberfläche des metallischen Wälzlagerbauteils benötigt wird, sondem stattdessen die Metallbeschichtung direkt auf die nicht-sandgestrahlte Oberfläche aufgebracht werden kann, kann das metallische Wälzlagerbauteil bereits in seiner finalen Form, d.h. mit bestehenden Form- und Lagetoleranzen, beschichtet werden. Insbesondere kann mittels des Cold-Spray-Verfahrens die Metallbeschichtung direkt auf geschliffene Flächen aufgebracht werden. Da ein Sandstrahlen der zu beschichtenden Oberfläche nicht erforderlich ist, kann verhindert werden, dass nach der Beschichtung noch Sandstrahlpartikel an dem Wälzlagerbauteil haften, die zu einer Beschädigung eines Lagers, in dem das Wälzlagerbauteil verbaut wird, führen könnten. Es ist jedoch vorteilhaft, die zu beschichtenden Flächen vor dem Beschichten zu entfetten und zu reinigen, um eine bessere Anhaftung der Metallbeschichtung zu ermöglichen.

Neben der Möglichkeit, ganze Flächen zu beschichten, besteht auch die Möglichkeit, nur kleine Teilbereiche einer Fläche zu beschichten, und dabei entweder lokale nicht miteinander verbundene Beschichtungsflächen zu erzeugen, oder auch eine am Wälzlagerbauteil komplett umlaufende Spur zu erzeugen, wie sie beispielsweise für eine Dichtungslauffläche günstig sein kann.

Im Gegensatz zu einer Beschichtung, die durch Flammspritzverzinkung aufgebracht wird, ist die kaltgasgespritzte Metallschicht nicht porös und muss daher nicht lackiert bzw. versiegelt werden. Des Weiteren hat die Metallbeschichtung eine höhere Dichte als eine durch Flammspritzverzinkung aufgebrachte Schicht. Bei geeigneter Parametrierung sind Schichtdichten von etwa 99 % erreichbar, die somit kaum mehr von massivem porenfreien Metall abweichen. Dementsprechend kann die Metallbeschichtung sehr dünn ausgeführt werden, beispielsweise im Bereich von 50 µm bis 150 µm.

Des Weiteren entsteht beim Flammspritzen eine thermische Belastung am Werkstück. Dieses wird heiß, was nicht nur den Eigenschaften des Werkstückes und den Eigenspannungen der Schicht abträglich sein kann, sondern was auch eine weitere Bearbeitung und Montage des Werkstückes nach dem Beschichten verzögert. Beim Cold Spray ist die thermische Einwirkung auf das Werkstück hingegen wesentlich geringer, wodurch das Wälzlagerbauteil wesentlich weniger beeinträchtigt wird.

Bei dem metallischen Wälzlagerbauteil kann es sich beispielsweise um den Ring eines Lagers, insbesondere eines Großlagers handeln. Auch andere Bestandteile eines Lagers können mit einer Metallbeschichtung versehen werden, die, wie hier beschrieben, mittels eines Hochdruck-Cold-Spray-Verfahrens aufgebracht wird.

Wie oben erwähnt wird die Metallbeschichtung mittels eines Hochdruck-Cold-Spray-Verfahrens, mit mehr als 50 bar, aufgebracht, wobei der Druck des Gasstrahls in dem Bereich von 50 bis 100 bar liegt.

Durch diesen Hochdruck wird das Gemisch aus Gasstrahl und Pulver über eine Düse auf mehrfache Überschallgeschwindigkeit beschleunigt, wobei es sich im Rahmen der Entspannung wieder abkühlt. Die Partikel des Pulvers in dem Gasstrahl treffen dabei mit hoher kinetischer Energie, insbesondere mit einer Geschwindigkeit von bis zu 1000 m/s auf die Oberfläche des metallischen Wälzlagerbauteils auf. Die Pulverpartikel sind dabei jedoch nicht mehr heiß oder schmelzflüssig. Vielmehr haften die Partikel an der Oberfläche des metallischen Wälzlagerbauteils durch lokale Umsetzung der kinetischen Energie, die zu einer Art Verschweißen des Pulvers auf der Oberfläche führt. Unter einer Verschwei-ßung wird hier eine Haftung verstanden, welche weit oberhalb der Werte von mechanischer Verklammerung liegt. Es handelts sich dabei um einen Haftabzugswert von etwa 50 MPa. Dies ist bis zu 10mal mehr als von vielen Lacksystemen als Haftung erwartet wird. Der Haftungsmechanismus beim Cold-Spray-Verfahren, insbesondere Hochdruck-Cold-Spray-Verfahren, beruht daher nicht auf einer Verklammerung der Partikel auf der Oberfläche, wie es bei einer Flammspritzverzinkung der Fall ist, sondern auf einem Verbinden des Pulvers mit der Oberfläche. Diese Verbindung kann besonders gut mittels Hochdruck erzeugt werden.

Nach dem Auftragen der Beschichtung mittels des Cold-Spray-Verfahrens, insbesondere eines Hochdruck-Cold-Spray-Verfahrens, kann die Pulverzufuhr abgeschaltet werden und der Gasstrom, beispielsweise Stickstoff, weiterdurchgesetzt werden. Dadurch ist es möglich, die typischerweise robotergeführte Cold-Spray-Pistole ähnlich einer Hochdruck-Druckluftpistole zu verwenden. Indem die programmierte Beschichtungsgeometrie nochmals abgefahren wird, können eventuell aufliegende lose Materialpartikel, die sich in der Spritzkabine auf die Werkstückoberfläche aufgelegt haben könnten, abgeblasen werden. Solche Partikel erreichen nicht die Härte von Sandstrahlkömem und sind für das Lager weit weniger gefährlich, jedoch kann die Beschichtungsanlage ohne zusätzlichen technischen Aufwand als Endreinigungsanlage direkt nach dem Beschichtungsvorgang verwendet werden

Die Kombination des metallischen Wälzlagerbauteils, beziehungsweise der nicht-sandgestrahlten Oberfläche des metallischen Wälzlagerbauteils, und der zumindest einen partiellen Metallbeschichtung, die mit kinetischem Beschuss durch das Cold-Spray-Verfahren, insbesondere Hochdruck-Cold-Spray-Verfahren, hergestellt wurde, hat Druckeigenspannungen. Diese Druckeigenspannungen des Werkstoffs erhöhen die Widerstandsfähigkeit des metallischen Wälzlagerbauteils, insbesondere den Widerstand gegen Rissbildung an der Oberfläche, und die Widerstandsfähigkeit gegen einen chemischen oder korrosiven Angriff. Der Grundwerkstoff des metallischen Wälzlagerbauteils wird durch das Cold-Spray-Verfahren verdichtet und erhält Druckeigenspannungen, ähnlich wie bei einem nicht-abrasiven Kugelstrahlen und die Metallbeschichtung selbst erhält auch Druckspannungen. Dies erhöht die Stabilität und Dichtheit des gesamten metallischen Wälzlagerbauteils.

Insbesondere kann es sich bei der Metallbeschichtung um eine Korrosionsschutzschicht handeln. Für die Korrosionsschutzschicht kann dem Gasstrahl des Cold-Spray-Verfahrens als Pulver beispielsweise Zink oder Aluminium, oder eine Kombination davon, zugeführt werden.

Gemäß einer Ausführungsform weist die Metallbeschichtung zusätzlich oder alternativ reibungsverändernde Partikel auf. Beispielsweise kann das Pulver für das Cold-Spray-Verfahren reibungsverändernde Partikel als Hartstoffpartikel aufweisen. Alternativ können dem Pulver, das Metalle für eine Korrosionsschutzschicht aufweist, reibungsverändernde Partikel hinzugefügt werden. Insbesondere kann es sich bei diesen Hartstoffpartikeln zur Reibungserhöhung um Titandiborid handeln. Die reibungsverändernden Partikel können entweder zur Erhöhung oder zum Absenken der Reibung der beschichteten Oberfläche verwendet werden.

Gemäß einer weiteren Ausführungsform ist die Metallbeschichtung als eine erste und mindestens eine zweite Schicht ausgebildet, die übereinander mittels des Cold-Spray-Verfahrens, insbesondere des Hochdruck-Cold-Spray-Verfahrens, aufgebracht sind. Beispielsweise kann es sich bei der ersten Schicht um eine Korrosionsschutzschicht handeln, und bei der zweiten Schicht um eine reibungsverändernde Schicht handeln. Weitere Schichten oder Kombinationen von Schichten sind ebenfalls möglich.

Es ist möglich, die zur Beschichtung verwendete Cold-Spray-Pistole mit mehreren Pulverzufuhrsystemen zu verbinden, die parallel oder wahlweise Pulver einspeisen. Dadurch kann mit derselben Pistole ohne Umrüstung ein Mehrschichtsystem aus verschiedenen Materialien aufgetragen werden. Beispielsweise können Wälzlagerringe durchgehärtet sein, oder auch nur im Laufbahnbereich einsatzgehärtet, so dass die zu beschichtende Außengeometrie je nach Bauart sehr verschiedene Härte haben kann. Die Verschweißungsfähigkeit der zuführbaren Metallpulver ist dann nicht in allen Fällen gegeben. Daher kann es erforderlich sein, eine erste Lage auf den Ring aufzuspritzen, welche die Eigenschaft eines Haftvermittlers hat und so ausgewählt wird, dass sie mit dem Untergrund verschweißt. Auf diese Haftvermittlerlage kann dann wiederum die eigentlich gewünschte Schicht aufgespritzt werden, welche mit der Haftvermittlerschicht verschweißt. Je nach Ringwerkstoff und Härte kann beispielsweise unter eine Zinkschicht eine Schicht aus Reineisen oder aus rostträgem Stahl gelegt werden, wodurch die Haftfestigkeit des Gesamtsystems gegenüber einer reinen Zinkschicht sehr stark erhöht wird.

Statt durch die Metallbeschichtung eine Schutzschicht bereitzustellen, oder zusätzlich zu einer solchen Schutzschicht, ist es auch möglich, die Metallbeschichtung zum Verändern der Form des metallischen Wälzlagerbauteils zu verwenden. Hierfür kommen beispielsweise Eisen- oder Stahlpulver in Frage. Wird die Metallbeschichtung nicht als dünne Schutzschicht aufgetragen, sondern lokal als dickere Schicht, kann beispielsweise das aufgebrachte Metall die Form der Oberfläche verändern, um eine Schulter oder ein Plateau auszubilden. Auf diese Weise ist es möglich, die Form des metallischen Wälzlagerbauteils anzupassen, ohne eine mechanische Bearbeitung durch Fräsen oder ähnliches durchzuführen.

Die Metallbeschichtung kann auch rostträgen bzw. rostfreien Stahl als Partikel beinhalten, die dem Gasstrahl des Cold-Spray-Verfahrens zugeführt werden. Insbesondere kann eine solche Metallbeschichtung als Grundierung für weitere Schichten dienen.

Des Weiteren wird ein Verfahren zum Herstellen eines metallischen Wälzlagerbauteils mit zumindest einer nicht-sandgestrahlten Oberfläche und mit zumindest einer partiellen Metallbeschichtung vorgeschlagen. Hierbei wird die Metallbeschichtung mittels eines Cold-Spray-Verfahrens, insbesondere eines Hochdruck-Cold-Spray-Verfahrens, direkt auf die nicht-sandgestrahlte Oberfläche aufgebracht. Wie oben erläutert, hat dies den Vorteil, dass die zu beschichtende Oberfläche bereits in ihrer finalen Form beschichtet werden kann.

Insbesondere wird die Metallbeschichtung unter Hochdruck, vorzugsweise mit mehr als 50 bar, aufgebracht. Durch den hohen Druck erfolgt eine Art Verschweißung der Partikel, die durch das Cold-Spray-Verfahren auf die nicht-sandgestrahlte Oberfläche aufgebracht werden. Diese "verschweißten" Partikel haben im Vergleich zu bislang verwendeten Beschichtungen, die durch Flammspritzverzinkung aufgebracht werden, den Vorteil, dass diese ohne Vorbehandlung der zu beschichtenden Oberfläche besser haften können. Die durch das Cold-Spray-Verfahren aufgebrachte Metallbeschichtung ist nicht porös und muss daher auch nicht lackiert oder versiegelt werden.

Gemäß einer weiteren Ausführungsform kann nach dem Aufbringen der Metallbeschichtung zumindest eine zweite Schicht mittels des Cold-Spray-Verfahrens, insbesondere Hochdruck-Cold-Spray-Verfahrens, aufgebracht werden. Wie oben erläutert, können auch weitere Schichten mittels des Cold-Spray-Verfahrens aufgebracht werden.

Des Weiteren kann durch das Aufbringen der Metallbeschichtung die Form des metallischen Wälzlagerbauteils verändert werden. Beispielsweise kann die Metallbeschichtung in der Form einer Schulter oder eines Plateaus aufgebracht werden, um die Form des metallischen Wälzlagerbauteils ohne Fräsen oder andere mechanische Bearbeitung zu verändern. Hierzu muss lediglich die Metallbeschichtung an den dafür vorgesehenen Stellen dicker oder mehrmals aufgebracht werden. Auf diese Weise ist eine einfache Anpassung der Form eines metallischen Wälzlagerbauteils möglich.

Das Cold-Spray-Verfahren, insbesondere Hochdruck-Cold-Spray-Verfahren, hat des Weiteren den Vorteil, dass die in dem Gasstrahl enthaltenen Partikel an der Oberfläche des metallischen Wälzlagerbauteils nur haften, wenn die Partikel in gerader, ungebremster Flugbahn und hinreichend steilem Winkel, idealerweise senkrechten Winkel, auf die Oberfläche auftreffen. Treffen die Partikel in einem zu flachen Winkel auf die Oberfläche, entsteht keine Haftung. Daher ist es möglich, dass die Metallbeschichtung als partielle Beschichtung ausgebildet ist. Beispielsweise kann in einer Bohrung in axialer Richtung hineingesprüht werden, wobei sich anders als bei einem aufbringen einer Beschichtung durch Flammspritzverzinkung keine Haftung an den Wänden ergibt. Lediglich der Bereich, in dem der Gasstrahl in senkrechtem oder im Wesentlichen senkrechten Winkel auftrifft, wird beschichtet. Daher ist der Abdeck- und Maskierbedarf bei dem Cold-Spray-Verfahren geringer als bei einer Flammspritzverzinkung.

Durch die wesentlich präzisere Materialaufbringung mit weniger und konstantem Overspray, gleichmäßigerem Volumendurchsatz, und einer dichten nichtporösen Schicht sind die Schichtdickentoleranzen bei Verwendung des Cold-Spray-Verfahrens, insbesondere Hochdruck-Cold-Spray-Verfahrens, wesentlich geringer als bei einer Flammspritzverzinkung. Demzufolge werden die Form- und Lagetoleranzen der zu beschichtenden Oberfläche in vorhersehbarer Weise verschoben und nicht in kritischer Weise verschlechtert. Versuche zeigten unter bestimmten Randbedingungen beim erfindungsgemäßen Verfahren eine Verringerung der Schichtdickenstreuung auf nur 1/10 der Streuung des Flammspritzens.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigt:

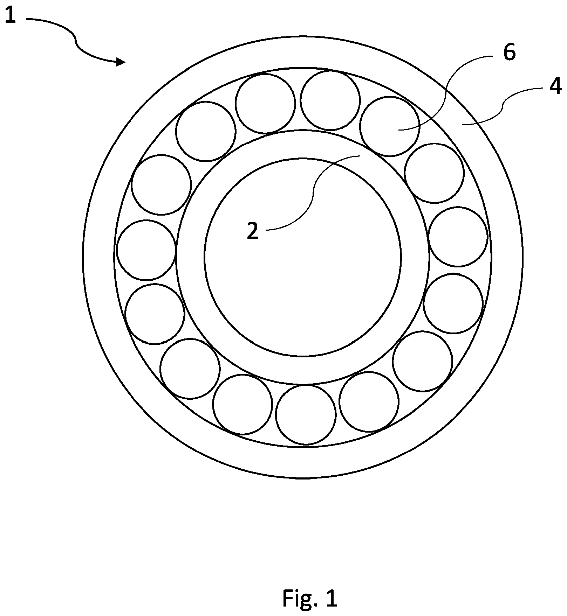

- Fig. 1:: eine schematische Schnittansicht eines Wälzlagers.

Im Folgenden werden gleiche oder funktionell gleichwirkende Elemente mit denselben Bezugszeichen gekennzeichnet.

In Figur 1 ist ein Wälzlager 1 in einer stark vereinfachten Skizze dargestellt. Das Wälzlager 1 weist einen Innenring 2 und einen Außenring 4 auf. Zwischen den beiden Ringen 2, 4 sind Wälzkörper 6 rotierbar angeordnet. Die Wälzkörper 6 können durch einen nicht gezeigten Käfig zueinander beabstandet gehalten werden.

Die verschiedenen Bauteile des Wälzlagers 1, beispielsweise der Innenring 2, der Außenring 4 oder die Wälzkörper 6, können als metallische Wälzlagerbauteile vorgesehen sein, die eine nicht-sandgestrahlte Oberfläche aufweisen. Hierbei kann zumindest eine nicht-sandgestrahlte Oberfläche mit zumindest einer partiellen Metallbeschichtung versehen werden. Die Metallbeschichtung wird mittels eines Cold-Spray-Verfahrens, insbesondere eines Hochdruck-Cold-Spray-Verfahrens, direkt auf die nicht-sandgestrahlte Oberfläche aufgebracht.

Beispielsweise kann es sich bei der Metallbeschichtung um eine Korrosionsschutzschicht handeln. Eine solche Schicht kann verwendet werden, um den Innenring 2 oder den Au-ßenring 4 mit einer Schutzschicht zu versehen, um die Bauteile gegenüber Korrosion bzw. Rost zu schützen.

Bislang wurde davon ausgegangen, dass für eine solche Metallbeschichtung ein Aufrauen, z.B. durch Sandstrahlen, der zu beschichtenden Oberfläche erforderlich ist, damit die Metallbeschichtung, die mittels eines Flammspritzverzinkungs-Verfahrens, als Lack oder mittels eines Cold-Spray-Verfahrens aufgebracht wird, an der Oberfläche haftet.

Es wurde jedoch überraschend festgestellt, dass es bei dem hier verwendeten Cold-Spray-Verfahren, insbesondere als Hochdruck-Cold-Spray-Verfahren ausgeführt, nicht erforderlich ist, die Oberflächen der Bauteile 2, 4 vorher durch Sandstrahlen aufzurauen. Das bedeutet, dass die Metallbeschichtung auf eine Oberfläche der Bauteile 2, 4 aufgebracht werden kann, die bereits in ihrer finalen Form vorhanden ist. Insbesondere werden durch das Aufbringen der Metallbeschichtung bevorzugt keine Form- oder Lagetoleranzen beeinflussen.

Die Metallbeschichtung wird insbesondere mittels eines Hochdruck-Cold-Spray-Verfahrens mit mehr als 50 bar auf die Oberfläche des metallischen Wälzlagerbauteils 2, 4, 6 aufgebracht. Durch das Aufbringen der Metallbeschichtung unter Hochdruck erfolgt eine Art Verschweißung der Metallpartikel, die in dem Gasstrahl des Cold-Spray-Verfahrens vorhanden sind, mit der Oberfläche des Wälzlagerbauteils 2, 4, 6. Durch diese Verschwei-ßung entsteht eine besonders stabile Metallbeschichtung, die im Gegensatz zu einer flammspritzverzinkten Beschichtung eine geringe Gefahr an Abplatzungen zeigt. Des Weiteren ist die Metallbeschichtung, die durch ein solches Cold-Spray-Verfahren aufgebracht wird, nicht porös, weshalb eine zusätzliche Lackierung oder Versiegelung entfallen kann.

Alternativ oder zusätzlich kann die Metallbeschichtung auch derart auf den Innenring 2 oder den Außenring 4 aufgebracht werden, dass die Form der Bauteile 2, 4 verändert wird. Beispielsweise kann die Metallbeschichtung in der Form einer Schulter oder eines Plateaus auf einen der Ringe 2, 4 aufgebracht werden. Hierzu ist es lediglich erforderlich, mittels des Cold-Spray-Verfahrens, insbesondere Hochdruck-Cold-Spray-Verfahrens, eine dickere Metallbeschichtung aufzubringen oder die Metallbeschichtung in mehreren Lagen an einer Stelle aufzubringen.

Durch das vorgeschlagene metallische Wälzlagerbauteil ist es möglich, ein Wälzlagerbauteil bereitzustellen, das eine verbesserte Metallbeschichtung aufweist, die im Vergleich zu bekannten Beschichtungen, die beispielsweise durch Flammspritzverzinkung aufgebracht werden, stabiler ist und auf einer unbehandelten bzw. nicht-sandgestrahlten Oberfläche aufgebracht werden kann.

### Bezugszeichenliste

- 1: Wälzlager
- 2: Innenring
- 4: Außenring
- 6: Wälzkörper

## Patentansprüche

1. Metallisches Wälzlagerbauteil (2, 4) mit zumindest einer nicht-sandgestrahlten Oberfläche und mit zumindest einer partiellen Metallbeschichtung, **dadurch gekennzeichnet, dass** die Metallbeschichtung mittels eines Hochdruck-Cold-Spray-Verfahrens direkt auf die nicht-sandgestrahlte Oberfläche aufgebracht ist, wobei der Druck des Gasstrahls in dem Bereich von 50 bis 100 bar liegt, und wobei die Metallbeschichtung einen Haftabzugswert von 50 MPa aufweist.

2. Metallisches Wälzlagerbauteil nach Anspruch 1, wobei die Metallbeschichtung zusätzlich reibungsverändernde Partikel aufweist.

3. Metallisches Wälzlagerbauteil nach einem der vorhergehenden Ansprüche, wobei die Metallbeschichtung eine Korrosionsschutzschicht ist.

4. Metallisches Wälzlagerbauteil nach einem der vorhergehenden Ansprüche, wobei die Metallbeschichtung als eine erste und mindestens eine zweite Schicht ausgebildet ist, die übereinander mittels des Cold-Spray-Verfahrens aufgebracht sind.

5. Metallisches Wälzlagerbauteil nach einem der vorhergehenden Ansprüche, wobei die Metallbeschichtung dazu ausgebildet ist, die Form des metallischen Wälz- oder Gleitlagerbauteils (2, 4) zu verändern.

6. Metallisches Wälzlagerbauteil nach einem der vorhergehenden Ansprüche, wobei das metallische Wälz- oder Gleitlagerbauteil Druckspannungen aufweist.

7. Verfahren zum Herstellen eines metallischen Wälzlagerbauteils (2, 4) mit zumindest einer nicht-sandgestrahlten Oberfläche und mit zumindest einer partiellen Metallbeschichtung, **dadurch gekennzeichnet, dass** die Metallbeschichtung mittels eines Hochdruck-Cold-Spray-Verfahrens direkt auf die nicht-sandgestrahlte Oberfläche aufgebracht wird, wobei der Druck des Gasstrahls in dem Bereich von 50 bis 100 bar liegt, und wobei die Metallbeschichtung einen Haftabzugswert von 50 MPa aufweist.

8. Verfahren nach Anspruch 7, wobei die Metallbeschichtung zusätzlich reibungsverändernde Partikel aufweist.

9. Verfahren nach Anspruch 7 oder 8, wobei nach dem Aufbringen der Metallbeschichtung zumindest eine zweite Schicht mittels des Cold-Spray-Verfahrens aufgebracht wird.

10. Verfahren nach einem der Ansprüche 7 bis 9, wobei das Aufbringen der Metallbeschichtung die Form des metallischen Wälzlagerbauteils (2, 4) verändert.

11. Verfahren nach einem der Ansprüche 7 bis 10, wobei die Metallbeschichtung in gerader, ungebremster Flugbahn und in einem steilen Winkel, insbesondere in einem senkrechten Winkel, auf die Oberfläche aufgebracht wird.

## Claims

1. Metallic rolling bearing component (2, 4) having at least one non-sandblasted surface and having at least a partial metal coating, **characterized in that** the metal coating is applied directly to the non-sandblasted surface by means of a high-pressure cold spraying method, wherein the pressure of the gas jet lies in the range from 50 to 100 bar, and wherein the metal coating has a peel strength value of 50 MPa.

2. Metallic rolling bearing component according to Claim 1, wherein the metal coating additionally comprises friction-changing particles.

3. Metallic rolling bearing component according to either of the preceding claims, wherein the metal coating is a corrosion protection layer.

4. Metallic rolling bearing component according to one of the preceding claims, wherein the metal coating is in the form of a first and at least a second layer which are applied on top of one another by means of the cold spraying method.

5. Metallic rolling bearing component according to one of the preceding claims, wherein the metal coating is designed to change the shape of the metallic rolling or sliding bearing component (2, 4).

6. Metallic rolling bearing component according to one of the preceding claims, wherein the metallic rolling or sliding bearing component has compressive stresses.

7. Method for producing a metallic rolling bearing component (2, 4) having at least one non-sandblasted surface and having at least a partial metal coating, **characterized in that** the metal coating is applied directly to the non-sandblasted surface by means of a high-pressure cold spraying method, wherein the pressure of the gas jet lies in the range from 50 to 100 bar, and wherein the metal coating has a peel strength value of 50 MPa.

8. Method according to Claim 7, wherein the metal coating additionally comprises friction-changing particles.

9. Method according to Claim 7 or 8, wherein, after the metal coating has been applied, at least a second coating is applied by means of the cold spraying method.

10. Method according to one of Claims 7 to 9, wherein the application of the metal coating changes the shape of the metallic rolling bearing component (2, 4) .

11. Method according to one of Claims 7 to 10, wherein the metal coating is applied to the surface in a straight, unrestrained trajectory and at a steep angle, in particular at a perpendicular angle.

## Revendications

1. Composant de roulement métallique (2, 4) comprenant au moins une surface non sablée et au moins un revêtement métallique partiel, **caractérisé en ce que** le revêtement métallique est appliqué directement sur la surface non sablée au moyen d'un procédé de pulvérisation à froid à haute pression, la pression du jet de gaz étant dans la gamme allant de 50 à 100 bars, et le revêtement métallique ayant une valeur de résistance à la traction de 50 MPa.

2. Composant de roulement métallique selon la revendication 1, le revêtement métallique comportant en outre des particules de modification de friction.

3. Composant de roulement métallique selon l'une des revendications précédentes, le revêtement métallique étant une couche de protection contre la corrosion.

4. Composant de roulement métallique selon l'une des revendications précédentes, le revêtement métallique étant formé d'une première et d'au moins une deuxième couche qui sont appliquées l'une sur l'autre au moyen du procédé de pulvérisation à froid.

5. Composant de roulement métallique selon l'une des revendications précédentes, le revêtement métallique étant conçu pour modifier la forme du composant de roulement ou de palier lisse métallique (2, 4).

6. Composant de roulement métallique selon l'une des revendications précédentes, le composant de roulement ou de palier lisse métallique présentant des contraintes de compression.

7. Procédé de fabrication d'un composant de roulement métallique (2, 4) pourvu d'au moins une surface non sablée et d'au moins un revêtement métallique partiel, **caractérisé en ce que** le revêtement métallique est appliqué directement sur la surface non sablée à l'aide d'un procédé de pulvérisation à froid à haute pression, la pression du jet de gaz étant dans la gamme allant de 50 à 100 bars, et le revêtement métallique ayant une valeur de résistance à la traction de 50 MPa.

8. Procédé selon la revendication 7, le revêtement métallique comportant en outre des particules de modification de friction.

9. Procédé selon la revendication 7 ou 8, au moins une deuxième couche étant appliquée à l'aide du procédé de pulvérisation à froid après l'application du revêtement métallique.

10. Procédé selon l'une des revendications 7 à 9, l'application du revêtement métallique modifiant la forme du composant de roulement métallique (2, 4).

11. Procédé selon l'une des revendications 7 à 10, le revêtement métallique étant appliqué sur la surface suivant une trajectoire droite, non freinée et avec un angle prononcé, en particulier un angle vertical.
